# EUROPÄISCHE PATENTSCHRIFT

(11) **EP 1 027 850 B1**
(45) Veröffentlichungstag und Bekanntmachung des Hinweises auf die Patenterteilung: **08.12.2004**
(21) Anmeldenummer: 99126043.1
(22) Anmeldetag: 28.12.1999
(51) Int. Cl.: A47J 42/18, B02C 7/14

(54) **Kornmühle**
Corn mill
Moulin à céréales

(30) Priorität: 11.02.1999 DE 19905618
(43) Veröffentlichungstag der Anmeldung: 16.08.2000
(73) Patentinhaber: hawo's Kornmühlen GmbH, 61352 Bad Homburg (DE)
(72) Erfinder: Reuter, Steffen, 64747 Breuberg (DE)
(74) Vertreter: Hiebsch, Gerhard F., Dipl.-Ing.

(56) Entgegenhaltungen:
- DE-A- 2 436 482
- DE-A- 3 531 603
- DE-C- 835 186
- US-A- 2 876 958

## Beschreibung

Die Erfindung betrifft eine Getreide mühle mit einem Mahlengehäuse für eine von einem Motor über einen Riementrieb antreibbare Mahlwelle nach dem Oberbegriff des Patentanspruch 1.

Derartige Kommühlen dienen dazu, kleinere . Getreidemengen überwiegend für den unmittelbaren Gebrauch zu mahlen Sie werden in kleinerer Ausführung im Haushalt, in größerer Ausführung aber auch in Ladengeschälten oder in Küchen von Restaurants oder für die Gemeinschaftsverpflegung eingesetzt

Bei kleineren und kompakten Kornmühlen wird überwiegend eine Bauart gewählt, bei der die Motorwelle zugleich die den angetriebenen Mahlstein tragende Mahlwelle bildet. Da keine gesonderte Lagerung der Mahlwelle erforderlich ist, ergibt sich ein verhältnismäßig einfacher konstruktiver Aufbau. Die zur Verstellung des Mahlspalts erforderliche Relativvarstellung zwischen dem angetriebenen und dem ortsfesten Mahlstein kann durch eine Verstellung des ortsfesten Mahlsteins (DE 43 26 926 C2) oder durch eine Verstellung des angetriebenen Mahlsteins erfolgen, wobei üblicherweise der gesamte Motor axial verstellbar ist (DE 3903 017 A1).

Für Kommühlen größerer Leistung, wie sie üblicherweise im gewerblichen Bereich eingesetzt werden. ist eine Bauart gebräuchlich, bei der die Motorwelle mit der Mahlwelle über einen Riementrieb verbunden ist. Die Mahlwelle ist in einem Lagergehäuse gelagert, das an einem Basisteil angeschraubt ist Bei einer bekannten Kommühle der eingangs genannten Galtung ist die Mahlwelle im Lagergehäuse axial verschiebbar und stützt sich an einem die Verstelleinrichtung bildenden zentralen Widerlager ab.

Die gattungsbildende DE-A-24 36 482 offenbart eine Mühle für den Haushalt mit in einem Gehäuse senkrecht gelagerter Welle, die an ihrem oberen Ende in Wirkverbindung mit einem Antriebsmotor steht und an ihrem unteren Ende einen drehfest ihr verbundenen, waagerecht angeordneten Mahlstein trägt, der gegenüber einem darüber ortsfest gelagerten zweiten Mahlstein verdrehbar ist; zwischen beiden Mahlsteinen befindet sich ein -- von einer Eintrittsöffnung zu einer Austrittsöffnung konisch verlaufender und sich verengender -- Mahlraum, der zur Korngrößeneinstellung des Mahlgutes vergrößerbar bzw. verkleinerbar gestaltet ist. Dieser Mahlraum wird durch konische Flächen der horizontalen Mahlsteine begrenzt, deren oberer in das Gehäuse eingeklebt sowie mit einem die Eintrittsöffnung anbietenden Trichter fest verbunden ist. Die in einer Hülse unverschieblich gelagerte Welle kann zur Größenänderung des Mahlraumes mit der Hülse axial verschoben werden, wobei die mit einem Verstellhebel versehene Hülse beidends in Gewinden sitzt und zum Verstellen um ihre Längsachse gedreht wird. Eine Feineinstellung des Mahlraumes ist hier -- angesichts der Gewindelagerung -- ohne Steinkontakt nicht möglich, zudem fehlt angesichts der Vorgabe durch das Gewinde die Möglichkeit einer frei wählbaren Steuerung zum Verstellen.

Der im Sommer 1950 hinterlegten DE-C-835 186 ist eine Stell- und Ausrückvorrichtung für Kaffeemühlen zu entnehmen; eine Verstelleinrichtung für Grob- und Feinmahlung ist mit einer Auslöseeinrichtung für zwischen zwei Mahlkonusse - als Teile des metallischen Gehäuses ausgebildeten - geratene Fremdkörper kombiniert. Hier ist die Verstellung rasterungsabhängig und nicht stufenlos verstellbar. Ein äußerer Mahlkonus wird gegenüber dem Gehäuse unter Zwischenschaltung einer schraubenförmigen Führungsnut und eines Führungsstiftes geführt, so dass beim Verdrehen des äußeren Konusteiles gleichzeitig eine axiale Verschiebung erfolgt. Jene Führungsnut ist im äußeren Konus und der Führungsstift am Gehäuse - oder umgekehrt - angeordnet.

Die Mühle nach DE-A-35 31 603 enthält kein Steinmalhlwerk, und die Verstellung erfolgt über ein Gewinde. Es wird dazu eine Feder benötigt, um die grobe Einstellung zu verbessern. Eine Einstellmuffe befindet sich im Bereich drehender Teile, weshalb eine Verstellung während des Mahlvorganges nicht möglich ist. Die Mühle besteht im übrigen aus zwei unterschiedlichen Mahlwerken und arbeitet mit Luftansaugung.

Diese Aufgabe wird erfindungsgemäß dadurch gelöst, daß die Mahlwelle in einer Lagerhülse drehbar und axial unverschiebbar gelagert ist und daß die Lagerhülse mittels der Verstelleinrichtung im Lagergehäuse axial verschiebbar ist.

Da auf eine axiale Verschiebbarkeit der Mahlwelle im unmittelbaren Lagerbereich verzichtet wird, lässt sich eine hochbelastbare, weitestgehend warlungsfreie und wenig störanfällige Lagerung der Mahlwelle realisieren. Die zur Einstellung des Mahlspalts erforderliche Axialverstellung des drehangetriebenen Mahlsteins erfolgt durch eine Axialverschiebung der Lagerhülse im Lagergehäuse.

Gemäß einer bevorzugten Ausführungsform der Erfindung ist vorgesehen, daß die Lagerhülse mitas der Verstelleinrichtung verdrehbar ist und daß die Lagerhülse im Lagergehäuse längs einer in Umfangsrichtung ansteigenden Führungsfläche geführt ist. Hierzu weist das Lagergehäuse vorteilhalterweise einen in Umfangsrichtung ansteigenden Kulissenschlitz auf, durch den ein mit der Lagerhülse verbundener Führungszapfen ragt.

Die Führung und axiale Abstützung zwischen der verschiebbaren Lagerhülse und dem im Mühlengehäuse lestgelegten Lagergehäuse ergibt eine sichere und spielfreie gegenseitige Abstützung, ohne daß hierfür axiale Verstellkräfte von Teilen des Mühlengehäuses aufgenommen und übertragen werden müssten. Damit wird erreicht, daß der jeweils eingestellte Mahispalt unabhängig von den auftretenden Belastungen weitestgehend konstant bleibt und eine Berührung der beiden Mahlsteine auch dann ausgeschlossen ist, wenn kein Mahlgut eingebracht wird.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:

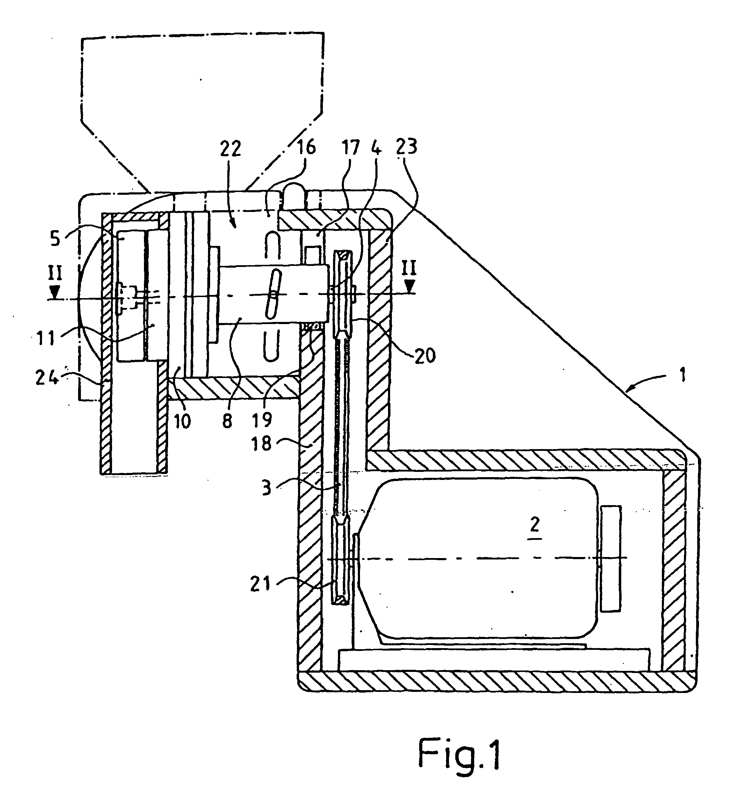

Fig. 1 eine Kornmühle in einem senkrechten Schnitt,
Fig 2 einen vergrößerten Schnitt längs der Linie II-II in Fig. 1, wobei das Mühlengehäuse und die Mahlkammer der einfacheren Darstellung halber weggelassen sind,
Fig 3 eine Ansicht der in Fig 2 gezeigten Baugruppe in Richtung des Pfeiles III,
Fig. 4 in einer räumlichen Teildarstellung die Lagereinschubeinheit nach den Fig. 2 und 3 vor dem Einsetzen in das Mühlengehäuse und
Fig. 5 in räumlicher Teildarstellung die Mahlkammer vor der Anbringung am Mühlengehäuse.

Die in der Zeichnung dargestellte Kommühle weist ein beispielsweise aus Holz bestehendes Mühlengehäuse 1 auf. In einem unteren Abschnitt des Mühlengehäuses 1 ist ein Motor 2 angeordnet, der über einen beispielsweise als Keilriementrieb ausgeführten Riementrieb 3 eine horizontale Mahlwelle 4 antreibt.

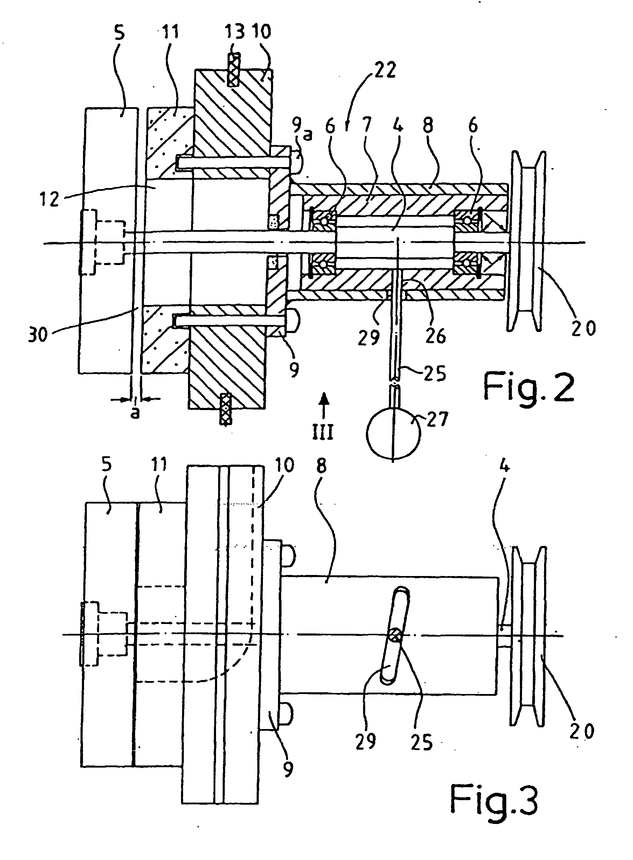

Wie man in Einzelheiten aus Fig. 2 erkennt, trägt die Mahlwelle 4 an ihrem vom Riementrieb 3 abgekehrten vorderen Wellenende einen drehangetriebenen Mahlstein 5. Die Mahlwelle 4 ist in Lager 6, beispielsweise Wälzlager, in einer Lagerhülse 7 drehbar und axial unverschiebbar gelagert. Die Lagerhülse 7 ist axial verschiebbar in einem Lagergehäuse B aulgenommen. das beispielsweise als Hohlzylinder ausgeführt ist und an seinem einen Ende eine angeschweißte Stirnplatte 9 aufweist.

Das Lagergehäuse 8 ist über die Stirnplatte 9 an einer Einschubplatte 10 durch Schrauben 9a angeschraubt, die auf der gegenüberliegenden Seite einen ortsfesten Mahlstein 11 trägt, der beispielsweise angeklebt ist. Die Mahlwelle 4 ragt durch die Stirnplatte 9 und die Einschubplatte 10 und durch eine zentrale Öffnung 12 des ortsfesten Mahlsteins 11.

Die Einschubplatte 10 weist zwei seitlich vorspringende senkrechte Führungsleisten 13 auf, die jeweils in eine senkrechte Führungsnut 14 der Seitenwände 15 eines Aufnahmeschachtes 16 des Mühlengehäuses 1 eingreifen.

Das Lagergehäuse 8 ist an seinem dem Riemenlneb zugekehrten Ende in eine nach oben offene Ausnehmung 17 einer Gehäusewand 18 des Mühlengehäuses 1 eingelegt. Die Gehäusewand 18 bildet die Rückwand des Aufnahmeschachies 16.

Die das Lagergehäuse 8 aufnehmende Ausnehmung 17 der Gehäusewand 18 ist mindestens teilweise, nämlich in ihrem unteren Bereich und teilweise an ihren beiden Seiten mit elastischem Lagermatertal 19 ausgekleidet, beispielsweise einem Gummiwulst.

Die das Lagergehäuse 8 aufnehmende Ausnehmung 17 der Gehäusewand 18 ist entgegengesetzt zum Riementrieb 3 geöffnet, d h. beim dargestellten Ausführungsbeispiel nach oben, während der Riementrieb 3 von der oberen, auf der Mahlwelle 4 angeordneten Riemenscheibe 20 nach unten zu einer Riemenscheibe 21 auf der Welle des Elektromotors 2 verläult. Der vom Riementrieb 3 ausgeübte, nach unten genchtete Zug legt damit die das Lagergehäuse 8 und die Einschubplatte 10 umfassende Lagereinschubeinheit 22 in ihrer Betriebsstellung im Einschubschacht 16 fest

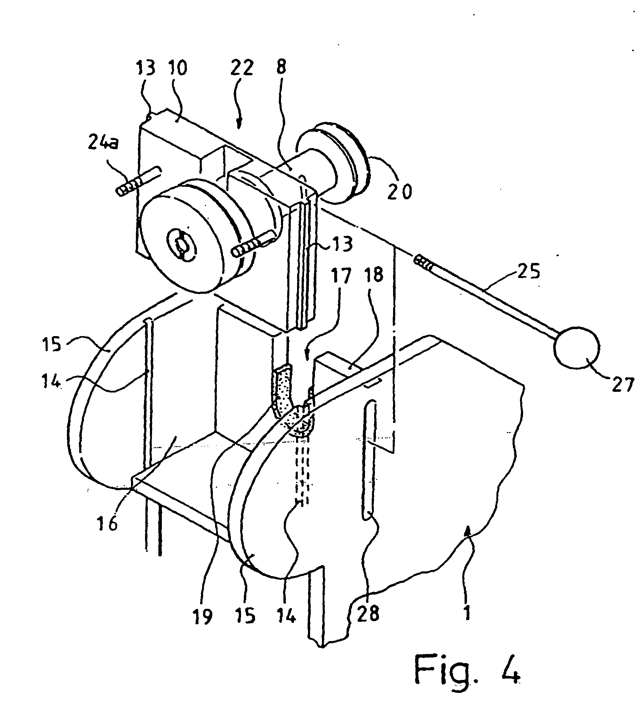

Ein Gehäusedeckel 23 der mindestens das dem Riementrieb 3 zugekehrte Ende des Lagergehäuses 8 und mindestens den hierzu benachbarten Teil des Riementriebs 3 bedeckt, ist abnehmbar am Mühlengehäuse 1 angebracht. Nach dem Abnehmen dieses Gehäusedeckels kann der Keilriemen des Riementriebs 3 von der Riemenscheibe 20 gelöst und die Lagereinschubeinheit 22 nach oben aus dem Einschubschacht 16 des Mühlengehäuses 1 herausgenommen werden, wie in Fig. 4 angedeutet ist. Dabei werden auch die beiden Mahlsteine 5 und 11 herausgenommen. Für etwaige Wartungs- und Reparaturarbeiten, die an der Lagerung der Mahlwelle 4 und/oder an den Mahlsteinen 5 und 11 anfallen könnten, wird nur die Lagereinschubeinheit 22 aus dem Mühlengehäuse 1 herausgenommen. Eine weitere, aufwendige Demontage der Kornmühle oder ein Transport der gesamten Kornmühle zum Herstellerwerk oder einem Reparaturbetrieb sind nicht erforderlich.

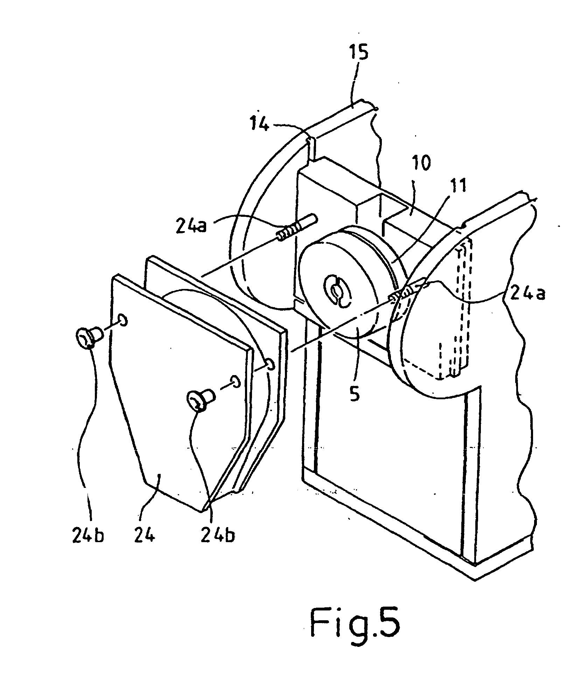

Eine die beiden Mahlsteine 5, 11 größtenteils umschließende Mahlkammer 24 ist abnehmbar an der den Mahlstein 11 tragenden Außenfläche der Einschubplatte 10 befestigt. Nach dem Lösen zweier Verschraubungen 24a, 24b kann die Mahlkammer 24 axial abgezogen werden, wie in Fig. 5 dargestellt ist.

Eine der Verstellung der Breite a des Mahlspalts 30 zwischen den Mahlsteinen 5 und 11 dienende Verstelleinrichtung weist einen Führungszapfen 25 auf (Fig. 2), der in eine radiale Gewindebohrung 26 der Lagerhülse 7 eingeschraubt ist. Der Führungbzapfen 25 trägt an seinem anderen Ende einen Verstellgriff 27, der aus einem Schlitz 28 des das Lagergehäuse aufnehmenden Mühlengshäuses 1 herausragt.

Der Führungszapfen 25 ragt durch einen in Umfangsrichtung ansteigenden Kulissenschlitz 29 des Lagergehäuses 8. Die Lagerhülse 7 ist mittels der Verstelleinrichtung im Lagergehäuse 8 verdrehbar. Der Führungsschlitz 29 bildet eine in Umlangsrichtung ansteigende Führungsfläche, an der die Lagerhülse 7 im Lagergehäuse 8 mittels des Führungszaplens 25 geführt ist.

Wird der Verstellgriff 27 an der Gehauseaußenseite nach oben und unten bewegt, so führt die Drehung und axiale Verschiebung der Lagerhülse 7 gegenüber dem Lagergehäuse 8 zu einer axialen Verschiebung der Mahlwelle 4 und damit zugleich auch des Mahlsteins 5, so daß sich der Mahlspalt 30 ändert Im Gegensatz zu einer nur einseitigen Abstützung einer axial verschiebbaren Mahlwelle 4 bewirkt die formschlüssig Führung des Führungszaplens 5 im Kulissenschtitz 29 eine definierte Einstellung des Mahispalts 30, und zwar unabhängig davon, ob durch eingebrachtes Mahlgut eine axiale Kraft auf den verschiebbaren Mahlstein 5 ausgeüb; wird oder nicht. Damit ist sichergestellt. daß sich die beiden Mahlsteine 5 und 11 auch dann nicht berühren konnen. wenn kein Mahlgut eingebracht wird

## Patentansprüche

1. Getreidemühle mit einem Mühlengehäuse (1) für eine von einem Motor (2) über einen Riementrieb (3) antreibbare Mahlwelle (4), die einen drehangetriebenen Mahlstein (5) trägt und durch eine zentrale Öffnung (12) eines ortsfesten Mahlsteins (11) ragt, wobei die Mahlwelle (4) in einer Lagerhülse (7) drehbar und axial verschiebbar gelagert ist und die Lagerhülse (7) mittels eines von ihr abragenden Verstellgriffes (27) einer Verstelleinrichtung zur Einstellung eines Mahlspalts (30) relativ zu dem ortsfesten Mahlstein (11) axial verstellbar ist,
**dadurch gekennzeichnet,**
**dass** die Lagerhülse (7) von einem Lagergehäuse (8) umfangen und in diesem längs einer in Umfangsrichtung ansteigenden Führungsfläche (29) für einen Führungszapfen (25) des Verstellgriffes (27) drehbar geführt ist, wobei das Lagergehäuse (8) an einem Teil (10) des Mühlengehäuses (1) festliegt, der mit dem ortsfesten Mahlstein (11) verbunden und von der Mahlwelle (4) durchgriffen ist, und der mit dem ortsfesten Mahlstein (11) verbundene Teil des Mühlengehäuses (1) eine Einschubplatte (10) ist, an die das Lagergehäuse (8) angeschlossen ist.

2. Getreidemühle nach Anspruch 1, **dadurch gekennzeichnet, dass** das Lagergehäuse (8) einen in Umfangsrichtung ansteigenden Kulissenschlitz (29) als Führungsfläche aufweist, den der mit der Lagerhülse (7) verbundene Führungszapfen (25) durchgreift.

3. Getreidemühle nach einem der Ansprüche 1 bis 2, **dadurch gekennzeichnet, dass** die mit dem ortsfesten Mahlstein (11) verbundene Einschubplatte (10) an eine Stirnplatte (9) des Lagergehäuses (8) angeschlossen ist.

4. Getreidemühle nach Anspruch 1 oder 3, **dadurch gekennzeichnet, dass** die Einschubplatte (10) mit einer die Mahlsteine (11, 5) aufnehmenden Mahlkammer (24) verbunden ist.

5. Getreidemühle nach Anspruch 3 oder 4, **dadurch gekennzeichnet, dass** die Einschubplatte (10) quer zur horizontal angeordneten Mahlwelle (4) verläuft sowie in einem Aufnahmeschacht (16) des Mühlengehäuses (1) angeordnet ist.

6. Getreidemühle nach einem der Ansprüche 3 bis 5, **gekennzeichnet durch** eine Lagereinschubeinheit (22), welche zum einen das Lagergehäuse (8) mit die Stirnplatte (9) aufweisender Lagerhülse (7), die Mahlwelle (4) und den an dieser festliegenden Mahlstein (5) umfasst sowie zum anderen die von der Mahlwelle (4) durchgriffene Einschubplatte mit dem eine zentrale Öffnung (12) enthaltenden ortsfesten Mahlstein (11).

## Claims

1. Corn mill with a mill housing (1) for a grinding shaft (4) which is drivable by a motor (2) via a belt drive (3), carries a rotationally driven millstone (5) and projects through a central opening (12) of a stationary millstone (11), the grinding shaft (4) being held as rotatable and axially displaceable in a bearing sleeve (7) and the bearing sleeve (7) being axially adjustable by means of an adjusting handle (27) of an adjusting device projecting from the bearing sleeve for setting a grinding gap (30) relative to the stationary millstone (11),
**characterised in that**
the bearing sleeve (7) is surrounded by a bearing housing (8) and is guided as rotatable therein along a guide face (29), ascending in the circumferential direction, for a guide tappet (25) of the adjusting handle (27), the bearing housing (8) being fixed to a part (10) of the mill housing (1) which is connected to the stationary millstone (11) and penetrated by the grinding shaft (4) and the part of the mill housing (1) connected to the stationary millstone (11) being an insertion plate (10) to which the bearing housing (8) is joined.

2. Corn mill according to claim 1, **characterised in that** the bearing housing (8) has as guide face a crank slit (29), ascending in the circumferential direction, which the guide tappet (25) connected to the bearing sleeve (7) penetrates.

3. Corn mill according to one of claims 1 to 2, **characterised in that** the insertion plate (10) connected to the stationary millstone (11) is joined to a front plate (9) of the bearing housing (8).

4. Corn mill according to claim 1 or 3, **characterised in that** the insertion plate (10) is connected to a grinding chamber (24) accommodating one of the millstones (11, 5).

5. Corn mill according to claim 3 or 4, **characterised in that** the insertion plate (10) runs crosswise to the horizontally arranged grinding shaft (4) and is arranged in a receiving well (16) of the mill housing (1).

6. Corn mill according to one of claims 3 to 5, **characterised by** a bearing insertion unit (22), comprising on the one hand the bearing housing (8) with a bearing sleeve (7) having the front plate (9), the grinding shaft (4) and the millstone (5) fixed thereto and on the other hand the insertion plate penetrated by the grinding shaft (4) with the stationary millstone (11) containing a central orifice (12).

## Revendications

1. Moulin à blé avec un bâti de moulin (1) pour un arbre de meulage (4) pouvant être entraîné par un moteur (2) par l'intermédiaire d'une commande à courroie (3), lequel arbre supporte une meule (5) entraînée en rotation et dépasse d'une meule fixe (11) par une ouverture centrale (12), moyennant quoi l'arbre de meulage (4) est disposé de manière à être mobile en translation axialement et mobile en rotation dans un manchon de palier (7), et le manchon de palier (7) peut être réglé axialement à l'aide d'une poignée de réglage (27), dépassant de celui-ci, d'un dispositif de réglage permettant d'ajuster une fente de meulage (30) par rapport à la meule fixe (11),
**caractérisé en ce que** le manchon de palier (7) est entouré par un logement de palier (8) et est guidé en rotation dans celui-ci le long d'une surface de guidage (29) montant dans la direction périphérique pour un ergot de repérage (25) de la poignée de réglage (27), moyennant quoi le logement de palier (8) repose sur une partie (10) du bâti de moulin (1) qui est reliée à la meule fixe (11) et est traversée par l'arbre de meulage (4), et la partie reliée à la meule fixe (11) du bâti de moulin (1) est une plaque d'insertion (10), à laquelle est raccordé le logement de palier (8).

2. Moulin à blé selon la revendication 1, **caractérisé en ce que** le logement de palier (8) présente une rainure de coulisse (29) montant dans la direction périphérique sous la forme d'une surface de guidage, qui est traversée par des ergots de repérage (25) reliés au manchon du palier (7).

3. Moulin à blé selon l'une quelconque des revendications 1 ou 2, **caractérisé en ce que** la plaque d'insertion (10) reliée à la meule fixe (11) est raccordée à une plaque frontale (9) du logement de palier (8).

4. Moulin à blé selon l'une quelconque des revendications 1 ou 3, **caractérisé en ce que** la plaque d'insertion (10) est reliée à l'une des chambres de meulage (24) logeant la meule (11, 5).

5. Moulin à blé selon l'une quelconque des revendications 3 ou 4, **caractérisé en ce que** la plaque d'insertion (10) est disposée transversalement par rapport à l'arbre de meulage (4) disposé horizontalement et dans une cuve de logement (16) du bâti de moulin (1).

6. Moulin à blé selon l'une quelconque des revendications 3 à 5, **caractérisé par** une unité d'insertion de palier (22), qui, d'une part, comprend le logement de palier (8) avec le manchon de palier (7) présentant la plaque frontale (9), l'arbre de meulage (4) et la meule (5) fixe par rapport à celui-ci et, d'autre part, la plaque d'insertion traversée par l'arbre de meulage (4) avec la meule fixe (11) contenant une ouverture centrale (12).
